# EUROPÄISCHE PATENTSCHRIFT

(11) **EP 2 117 781 B1**
(45) Veröffentlichungstag und Bekanntmachung des Hinweises auf die Patenterteilung: **21.09.2011**
(21) Anmeldenummer: 08714272.5
(22) Anmeldetag: 05.03.2008
(51) Int. Cl.: B25J 9/10

(54) **MANIPULATOR FÜR DIE BELADUNG WENIGSTENS EINER MASCHINE, INSBESONDERE WERKZEUGMASCHINE, SOWIE BELADEVORRICHTUNG FÜR EINE DERARTIGE MASCHINE**
MANIPULATOR FOR CHARGING AT LEAST ONE MACHINE, IN PARTICULAR A TOOL MACHINE, AND CHARGING DEVICE FOR SAID TYPE OF MACHINE
MANIPULATEUR SERVANT À CHARGER AU MOINS UNE MACHINE, EN PARTICULIER UNE MACHINE-OUTIL, ET DISPOSITIF DE CHARGEMENT POUR UNE MACHINE DE CE TYPE

(30) Priorität: 09.03.2007 AT 1462007 U
(43) Veröffentlichungstag der Anmeldung: 18.11.2009
(73) Patentinhaber: Pal-tec Automation Gmbh, 8074 Grambach (AT)
(72) Erfinder: REISINGER, Erwin, 8055 Graz-Seiersberg (AT)
(74) Vertreter: Mann, Volker
(86) Internationale Anmeldenummer: PCT/AT2008/000075
(87) Internationale Veröffentlichungsnummer: WO 2008/109900

(56) Entgegenhaltungen:
- EP-A- 0 063 161
- US-A- 4 645 408

## Beschreibung

Die vorliegende Erfindung bezieht sich auf einen Manipulator nach dem Oberbegriff des Anspruchs 1. Die Erfindung bezieht sich darüber hinaus auf eine Beladevorrichtung für wenigstens eine Maschine, insbesondere Werkzeugmaschine, umfassend eine Beladestation für jeweils eine Palette mit einer Mehrzahl von zu bearbeitenden Werkstücken, eine Beladestation für die Maschine, insbesondere Werkzeugmaschine, und eine Mehrzahl von Palettenlager- bzw. -speicherplätzen zur Anordnung bzw. Aufnahme von jeweils einer Palette.

Im Zusammenhang mit der Beladung einer Maschine, insbesondere Werkzeugmaschine, ist es bekannt, zu bearbeitende Gegenstände bzw. Werkstücke auf einer Palette für die Bearbeitung in der Maschine vorzubereiten und eine Palette mit derartigen zu bearbeitenden Werkstücken an einer Beladestation für die Maschine zur Verfügung zu stellen; wobei Ober in der Maschine, insbesondere Werkzeugmaschine, enthaltene Aufnahme- bzw. Greifvorrichtungen jeweils eine Entnahme eines zu bearbeitenden Werkstücks von der Palette erfolgt. Nach vollständiger Bearbeitung sämtlicher auf einer Palette vorbereiteter bzw. angeordneter, zu bearbeitender Werkstücke wird die Palette mit den nunmehr fertig bearbeiteten Werkstücken wiederum entfernt, worauf eine neue Palette mit zu bearbeitenden Werkstücken der Maschine, insbesondere Werkzeugmaschine, zur Verfügung gestellt wird. Für eine derartige Handhabung von Paletten werden insbesondere automatisierte Manipulatoren verwendet, welche im wesentlichen automatisch gesteuert einen Transport von mit zu bearbeitenden Werkstücken beladenen Paletten von und zu der Maschine, insbesondere Werkzeugmaschine, und zwischen gegebenenfalls vorzusehenden Lager- bzw. Speicherplätzen und/oder Beladestationen von Paletten mit zu bearbeitenden Werkstücken bzw. die Entnahme von zu bearbeitenden Werkstücken transportieren.

Im Zusammenhang mit derartigen Manipulatoren sind einerseits Ausführungsformen bekannt, bei welchen eine Bewegung einer Gabel zur Aufnahme bzw. Abstützung jeweils einer Palette in einer im wesentlichen vertikalen Richtung im Sinn eines Anhebens und Absenkens einer Palette als auch einer hin- und hergehenden Bewegung in Richtung zu und weg von einem Palettenlagerplatz in einer im wesentlichen horizontalen Richtung erzielbar ist. Darüber hinaus ist zur Bedienung von mehreren Palettenlagerplätzen, welche im wesentlichen halbkreisförmig angeordnet sind, eine Rotation um eine im wesentlichen vertikale Achse eines die Gabel tragenden bzw. abstützenden Supports vorgesehen. Die im wesentlichen orthogonal aufeinander erfolgenden Bewegungen der Gabel des Manipulators in einer im wesentlichen vertikalen bzw. senkrechten Ebene erfolgen bei bekannten Ausführungsformen durch Bereitstellen einer Schlittenführung für die Gabel für die hin- und hergehende Bewegung in einer im wesentlichen horizontalen Richtung. Darüber hinaus ist im Bereich des Schlittens üblicherweise eine Hubvorrichtung vorgesehen, welche beispielsweise von einem im wesentlichen vertikal angeordneten Zylinderkolbenaggregat für ein Anheben und Absenken der Gabel und somit der Palette entsprechend gegebenenfalls unterschiedlichen Höhen von Palettenlagerplätzen als auch für ein zuverlässiges Anheben und Absenken von Paletten von Palettenlagerplätzen zu ermöglichen. Anstelle einer derartigen Hubvorrichtung, mit welcher üblicherweise große Hubhöhen bewältigbar sind, kann auch insbesondere in die Schlittenführung integriert eine Ausbildung mit zueinander geneigten Schrägflächen vorgesehen sein, so daß gemeinsam mit einer hin- und hergehenden Bewegung durch miteinander zusammenwirkende Schrägflächen gleichzeitig ein Anheben und Absenken der Gabel und somit einer Palette erfolgt, wobei in diesem Fall lediglich relativ geringe Hubhöhen bewältigt werden können. Nachteilig bei diesen bekannten Ausführungsformen ist insbesondere die aufwendige Mechanik im Bereich des Schlittens als auch der Hubvorrichtung zur Erzielung der im wesentlichen aufeinander normal stehenden Bewegung der Gabel. Darüber hinaus ist nachteilig, daß durch die Konstruktion der Schlittenführung sowie der Hubvorrichtung bekannte Manipulatoren eine überaus große Mindesthöhe für die Aufnahme einer mit zu bearbeitenden Werkstücken zu beladenden Palette aus einer Beladestation aufweisen. Derart erfolgt eine üblicherweise manuell erfolgende Beladung einer Palette auf einer relativ großen Höhe, so daß entweder Stufen bzw. Rampen beim Beladen der Palette von dem Bedienungspersonal überwunden werden müssen oder gegebenenfalls ein großes Gewicht aufweisende, zu bearbeitende Werkstücke entsprechend hoch angehoben werden müssen.

Anstelle von mit einem Drehantrieb ausgebildeten Manipulatoren, welche üblicherweise eine vergleichsweise geringe Anzahl von Palettenlagerplätzen bzw. Beladestationen bedienen können, sind darüber hinaus lineare und üblicherweise mehrere Etagen bzw. Ebenen aufweisende Palettenlade- und -speichersysteme bekannt, bei welchen ein üblicherweise brückenartiger Manipulator entlang von drei im wesentlichen normal aufeinander stehenden Verschieberichtungen bewegbar ist. Derartige lineare Systeme mit üblicherweise mehreren Etagen bzw. Ebenen sind jedoch üblicherweise nur für sehr große Anlagen sinnvoll, da insbesondere der konstruktive und Kostenaufwand zur Konstruktion eines derartigen Linearsystems üblicherweise um wenigstens eine Größenordnung größer als der konstruktive und Kostenaufwand für die oben erörterten Rotationssysteme ist.

EP 0 063 161 A1 beschreibt einen Manipulator gemäß dem Oberbegriff des Anspruchs 1 für das Beladen wenigstens einer Maschine mit Paletten. Der Manipulator weist eine Gabel auf, die an einem Support beweglich gelagert ist. Die Gabel ist dabei in einer im Wesentlichen vertikalen Ebene heb- und senkbar und in Richtung zu und weg von einem Palettenlagerplatz bewegbar. Der Manipulator weist dazu eine erste, vertikal ausgerichtete Bewegungseinrichtung mit einer ersten Antriebsspindel und einer in einem verlagerbaren Gehäuse vorgesehenen, drehfest aufgenommenen Spindelmutter sowie eine zweite, horizontal ausgerichtete Bewegungseinrichtung mit zwei in dem Gehäuse gelagerten Tragarmen und einer zweiten Antriebsspindel auf. Die Gabel ist an den Tragarmen aufgenommen. Eine Bewegung der Gabel in vertikaler Richtung wird durch Verlagerung des Gehäuses mittels der ersten Bewegungseinrichtung ermöglicht. Eine Bewegung der Gabel in horizontaler Richtung zu und weg von dem Palettenlagerplatz wird durch horizontale Verlagerung der Tragarme durch das Gehäuse hindurch ermöglicht. Der Support des Manipulators ist um eine senkrechte Achse drehbar, um eine Schwenkbewegung der Gabel in einer horizontalen Ebene zu ermöglichen.

US 4,645,408 A beschreibt einen als Roboterarm ausgebildeten Manipulator mit einem Greifelement. Das Greifelement ist mittels eines Gelenkvielecks und einer Hebelverbindung in einer vertikalen Richtung heb- und senkbar sowie in eine horizontale Richtung hin- und herbewegbar. Das Gelenkvieleck ist als Viergelenk ausgebildet und umfasst einen mit dem Greifelement verbundenen Hebelarm, einen ersten Lenker, einen zweiten Lenker und ein plattenartiges Element. Der Hebelarm bildet dabei eine Koppel und das plattenartige Element eine Basis des Viergelenks. Die Hebelverbindung umfasst einen ersten Hebelarm, einen zweiten Hebelarm, das plattenartige Element und ein Basiselement. Der erste Hebelarm und der zweite Hebelarm greifen jeweils an einem ersten Ende an das plattenartige Element und an einem zweiten, von dem ersten Ende abgewandten Ende an das Basiselement an. Das Basiselement ist fest mit einem Stellglied eines ersten Verstellantriebs verbunden. Der Verstellantrieb ist als in vertikaler Richtung betätigbarer Linearantrieb ausgebildet und an einem Support des Manipulators befestigt. Mittels des Stellglieds sind die Hebelverbindung, das Gelenkvieleck und das Greifelement in vertikaler Richtung verlagerbar. Der Manipulator umfasst ferner einen zweiten Verstellantrieb, der als in horizontaler Richtung betätigbarer Linearantrieb ausgebildet ist. Der zweite Verstellantrieb weist ein in horizontaler Richtung verstellbares Stellglied auf, an dem ein erster Antriebslenker und ein zweiter Antriebslenker jeweils an einem ersten Ende in einem gemeinsamen Gelenkpunkt gelenkig aufgenommen sind. Der erste Antriebslenker greift an seinem von dem Stellglied entfernten zweiten Ende an den ersten Lenker des Gelenkvielecks an. Weiter greift der zweite Antriebslenker an seinem von dem Stellglied entfernten Ende an den ersten Hebelarm an. Der erste Antriebslenker, der zweite Antriebslenker, der erste Hebelarm der Hebelverbindung und der erste Lenker des Gelenkvielecks bilden gemeinsam eine Antriebsviergelenkanordnung aus. Die Antriebsviergelenkanordnung koppelt jede Bewegung des Gelenkvielecks und der Hebelverbindung miteinander, wobei eine solche Bewegung sowohl mittels des ersten Verstellantriebs durch vertikale Bewegung des Basiselements als auch mittels des zweiten Verstellantriebs durch horizontale Bewegung des gemeinsamen Gelenkpunkts von erstem Antriebslenker und zweitem Antriebslenker ansteuerbar ist.

Die vorliegende Erfindung zielt daher darauf ab, einen Manipulator der eingangs genannten Art sowie eine Beladevorrichtung für eine Maschine, insbesondere Werkzeugmaschine, dahingehend weiterzubilden, daß mit einer konstruktiv einfachen und kostengünstigen Lösung ein sogenanntes Rotationsbeladesystem zur Verfügung gestellt werden kann, bei dem größere Hubhöhen bewältigt werden können und insbesondere eine Absenkung der Gabel des Manipulators auf gegenüber bekannten Ausführungsformen geringere Ladehöhen ermöglicht werden, so daß insbesondere die Arbeitshöhe von Beladestationen für die Vorbereitung von Paletten mit zu bearbeitenden Werkstücken abgesenkt und somit der Beladeaufwand verringert werden kann.

Zur Lösung dieser Aufgaben weist ein Manipulator der eingangs genannten Art erfindungsgemäß die kennzeichnenden Merkmale des Anspruchs 1 auf. Die Gabel ist über eine mit einem Gelenkvieleck, insbesondere im wesentlichen Gelenkparallelogramm, gekoppelte Hebelverbindung an dem Support gelagert und über zwei voneinander getrennte Verstellantriebe, welche an unterschiedlichen Stellen der Hebelverbindung und/oder des Gelenkvielecks angreifen, in der im wesentlichen vertikalen Ebene heb- und senkbar und in Richtung zu und weg von einem Palettenlagerplatz bewegbar. Dadurch, daß im Gegensatz zu bekannten Ausführungsformen, bei welchen konstruktiv aufwendige Schlitten- und Hubführungen bzw. -vorrichtungen zum Einsatz gelangen, eine Bewegung der Gabel in der im wesentlichen vertikalen Ebene im Hinblick auf ein Anheben und Absenken sowie eine Bewegung in Richtung zu und weg von einem Palettenlagerplatz über eine mit einem Gelenkvieleck, insbesondere im wesentlichen Gelenkparallelogramm, gekoppelte Hebelverbindung an dem Support vorgenommen wird, wird ermöglicht, daß mit einfach herstellbaren und gegenüber Präzisionsführungen verschleißarmen bzw. im wesentlichen verschleißfreien Konstruktionsteilen das Auslangen gefunden werden kann. Durch Vorsehen des Gelenkvielecks, insbesondere Gelenkparallelogramms, als auch der mit dem Support gekoppelten Hebelverbindung läßt sich entsprechend den gewünschten, zu erzielenden Hubhöhen ein großer Hubhöhenbereich überstreichen, so daß auch beispielsweise ein Absenken der Gabel zur Aufnahme einer Palette auf Höhen erfolgen kann, welche im wesentlichen im Bodenbereich bzw. Bereich der Anordnung des Drehgelenks des Manipulators im bzw. am Support liegt. Im Gegensatz zu bekannten Ausführungsformen kann somit eine Herabsetzung insbesondere der Aufnahmehöhe der Gabel für Paletten erzielt werden, da ein für die Bereitstellung der Schlittenführung sowie der Hubvorrichtung bei bekannten Ausbildungen vorzusehender Raum bzw. Abstand in vertikaler Richtung bei der erfindungsgemäßen Ausführungsform des Manipulators weitestgehend vermieden werden kann. Durch die darüber hinaus vorgesehenen, zwei voneinander getrennten Verstellantriebe läßt sich über die Kopplung des Gelenkvielecks bzw. Gelenkparallelogramms mit der Hebelverbindung ein entsprechend großer Bereich von Bewegungen bzw. einzunehmenden Positionen der Gabel sowohl in Höhenrichtung als auch in einer im wesentlichen horizontalen Richtung erzielen, so daß ein entsprechend großer Arbeits- bzw. Betätigungsbereich durch den erfindungsgemäßen Manipulator zur Verfügung gestellt wird. Darüber hinaus ist durch Vorsehen von Hebel- bzw. Gelenkverbindungen davon auszugehen, daß ein Verschleiß gegenüber bekannten Ausführungsformen mit relativ zueinander bewegbaren Führungen bzw. Schlitten und Hubelementen stark reduziert ist, da insbesondere im Bereich der Anlenkung der einzelnen Hebelarme bzw. -elemente und Teile des Gelenkvielecks entsprechend widerstandsfähige und verschleißarme bzw. verschleißfreie Gelenkteile, insbesondere Gleitbuchsen oder dgl., eingesetzt werden können.

Zur Erzielung einer gewünschten Stabilität und insbesondere zur Aufnahme von großen Kräften, welche bei gegebenenfalls größere Abmessungen und ein großes Gewicht aufweisenden, zu bearbeitenden Werkstücken auftreten, ist gemäß einer bevorzugten Ausführungsform vorgesehen, daß sämtliche Elemente des Gelenkvielecks sowie der Hebelverbindung jeweils symmetrisch zu dem die Rotationsachse der Gabel definierenden bzw. aufweisenden Support angeordnet sind und zu beiden Seiten mit der Gabel koppelbar sind. Durch die im wesentlichen symmetrische Anordnung der einzelnen, bewegbaren Elemente zu dem die Rotationsachse der Gabel definierenden bzw. aufweisenden Support auch im Bereich eines an sich bekannten Drehantriebs bzw. Drehgelenks, welcher(s) im Support integriert ist und eine Bewegung um eine im wesentlichen vertikale Drehachse zur Verfügung stellt, kann eine entsprechend stabile Konstruktion mit einfach herstellbaren Bauteilen erzielt werden.

Zur Erzielung eines gewünschten, großen Hubbereichs und Bewegungsbereichs in im wesentlichen horizontaler Richtung ist vorgesehen, daß jeweils zwei vorzugsweise im wesentlichen vertikal verlaufende und in Abstand voneinander an einer Basisplatte des Supports schwenkbar angelenkte Hebelarme vorgesehen sind, welche an ihren von der Basisplatte abgewandten Enden jeweils an einem plattenartigen Element angreifen. Vorzugsweise ist an diesem darüber hinaus jeweils ein Ende der das Gelenkvieleck ausbildenden, im wesentlichen parallel zueinander verlaufenden Träger bzw. Balken angelenkt, und die Gabel ist an den jeweils von der Verbindung mit dem plattenförmigen Element abgewandten Enden mit den im wesentlichen zueinander parallelen Trägern des Gelenkvielecks Ober einen weiteren Hebelarm gekoppelt. Es kann somit mit einer möglichst geringen Anzahl von Gelenkverbindungen bzw. Anlenkstellen das Auslangen gefunden werden, so daß insgesamt eine stabile und robuste Konstruktion auch zur Aufnahme großer Kräfte zur Verfügung gestellt werden kann.

Um eine im wesentlichen jeweils horizontale Anordnung der Gabel unabhängig von der Hubposition und/oder Position in horizontaler Richtung sicherzustellen, wird darüber hinaus vorgeschlagen, daß der mit der Gabel gekoppelte Hebelarm gebogen bzw. abgewinkelt ausgebildet ist, wie dies einer weiters bevorzugten Ausführungsform des erfindungsgemäßen Manipulators entspricht.

Zur weiteren Vereinfachung der Anlenkung als auch zur Einbringung großer Kräfte wird darüber hinaus bevorzugt vorgeschlagen, daß ein Anlenkpunkt eines im wesentlichen vertikalen Hebelarms und ein Anlenkpunkt eines Trägers des Gelenkvielecks zusammenfallen.

Wie oben bereits erwähnt, sind zur Bewegung der das Gelenkvieleck sowie die Hebelverbindung ausbildenden Elemente zwei voneinander getrennte Verstellantriebe vorgesehen, wobei für eine möglichst einfache und zuverlässige Steuerung der aufeinander abzustimmenden Bewegungen der Verstellantriebe zur Erzielung gewünschter Hubpositionen der Gabel und somit einer darauf aufgenommenen Palette als auch der jeweiligen, gewünschten, horizontalen Position darüber hinaus vorgesehen ist, daß ein Verstellantrieb an den plattenförmigen Elementen der Hebelverbindung gelagert ist. Vorzugsweise ist vorgesehen, dass ein Verstellantrieb an einem der im wesentlichen vertikal angeordneten Hebelarme angreift, wie dies einer weiters bevorzugten Ausführungsform des erfindungsgemäßen Manipulators entspricht.

Zur Aufnahme großer Kräfte und somit zur Ermöglichung eines Einsatzes möglichst kleinbauender Verstellantriebe wird darüber hinaus bevorzugt vorgeschlagen, daß die Verstellantriebe in im wesentlichen normal aufeinander wirkenden Richtungen im wesentlichen in der im wesentlichen vertikalen Ebene einer Verstellung der Gabel angeordnet sind. In diesem Zusammenhang wird erfindungsgemäß darüber hinaus bevorzugt vorgeschlagen, daß die Verstellantriebe von Spindelantrieben oder Servomotoren gebildet sind, so daß bekannte und in weiten Bereichen einsetzbare, entsprechend leicht steuer- bzw. regelbare Antriebe eine zuverlässige und präzise Bewegung der Gabel des Manipulators und somit damit zu transportierender Paletten ermöglichen.

Zur Erzielung eines großen Bewegungsbereichs bzw. Hubs der Gabel bei geringer Bauhöhe des Manipulators wird gemäß einer weiters bevorzugten Ausführungsform vorgeschlagen, daß die Elemente der Hebelverbindung und des Gelenkvielecks in einer Seitenansicht einander jeweils wenigstens teilweise kreuzen bzw. schneiden.

Zur Erfüllung der obengenannten Aufgaben ist darüber hinaus bei einer Beladevorrichtung für wenigstens eine Maschine, insbesondere Werkzeugmaschine, umfassend eine Beladestation für jeweils eine Palette mit einer Mehrzahl von zu bearbeitenden Werkstücken, eine Beladestation für die Maschine, insbesondere Werkzeugmaschine, und eine Mehrzahl von Palettenlager- bzw. -speicherplätzen zur Anordnung bzw. Aufnahme von jeweils einer Palette vorgesehen, daß sie einen Manipulator der Erfindung oder einer bevorzugten Ausführungsform davon zum Aufnehmen und Transportieren jeweils einer Palette zwischen den einzelnen Palettenlagerplätzen und Beladestationen aufweist. Wie oben bereits angeführt, ist es somit möglich, mit einem konstruktiv einfachen und somit kostengünstigen Manipulator große Verstellwege in einer im wesentlichen vertikalen Richtung zur Erzielung großer Hubbereiche als auch in einer horizontalen Richtung zur Verfügung zu stellen, so daß insbesondere bei Einsatz des erfindungsgemäßen Manipulators in der erfindungsgemäßen Beladevorrichtung für die Beladestationen zur Vorbereitung von Paletten mit zu bearbeitenden Werkstücken die Gabel auf eine ein Beladen vereinfachende Höhe bzw. ergonomisch günstige Position abgesenkt werden kann.

Die Erfindung wird nachfolgend anhand von in der beiliegenden Zeichnung schematisch dargestellten Ausführungsbeispielen näher erläutert. In dieser zeigen:
Fig. 1 eine schematische Draufsicht auf eine erfindungsgemäße Beladevorrichtung mit einer Mehrzahl von Palettenlager- bzw. -speicherplätzen und Beladestationen;
Fig. 2 in einer perspektivischen Ansicht eine Ausführungsform eines erfindungsgemäßen Manipulators zum Einsatz in der in Fig. 1 schematisch angedeuteten Beladevorrichtung; und

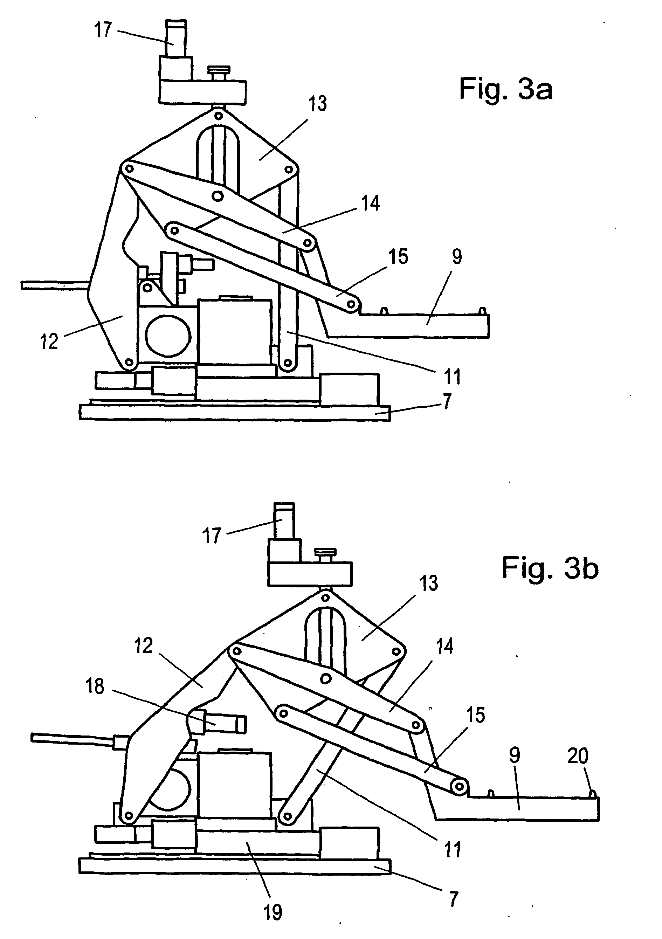

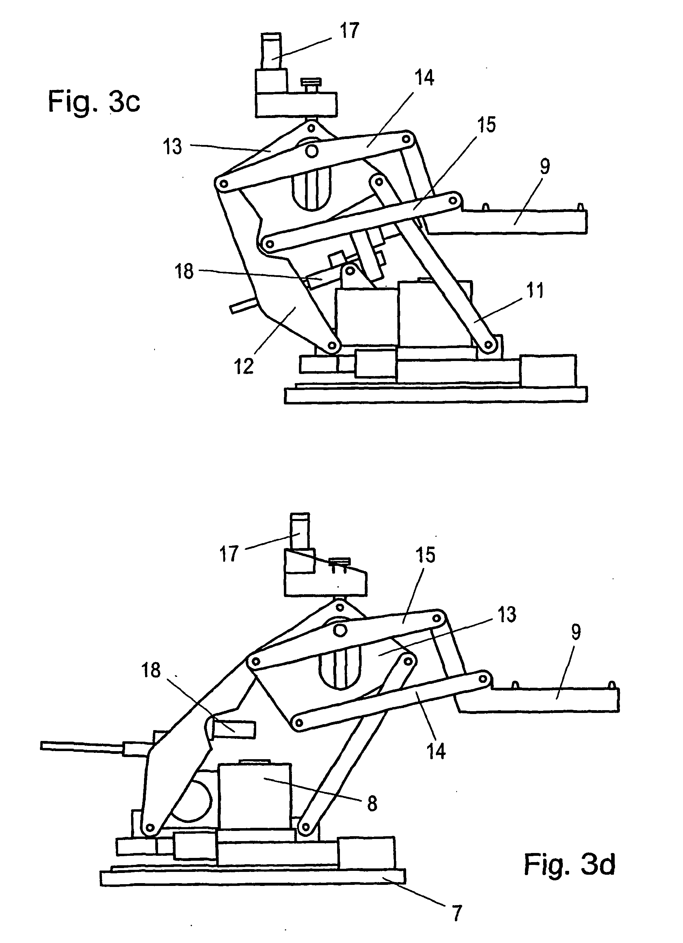

Fig. 3 jeweils in schematischer Seitenansicht unterschiedliche Stellungen bzw. Positionen des erfindungsgemäßen Manipulators, wobei Fig. 3a eine tiefe Position der Gabel des erfindungsgemäßen Manipulators in zurückgezogener Position bzw. in unmittelbarer Nachbarschaft am Support des Manipulators zeigt; Fig. 3b eine ebenfalls abgesenkte Position der Gabel in von dem Support in horizontaler Richtung wegbewegter Richtung zeigt; Fig. 3c ähnlich der Anordnung gemäß Fig. 3a eine angehobene Position der Gabel in einer zurückgezogenen Position zeigt und Fig. 3d eine angehobene Position der Gabel in von dem Support erstreckter bzw. vorragender Position zeigt.

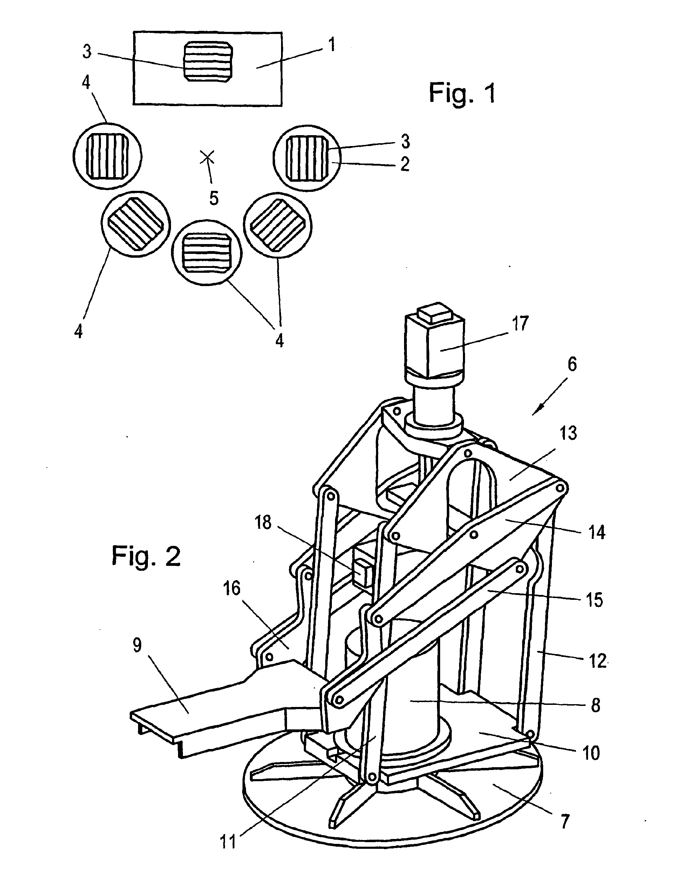

In Fig. 1 ist ein Schema einer Beladevorrichtung dargestellt, wobei mit 1 eine Beladestation für eine nachfolgende und nicht näher dargestellte Maschine, insbesondere Werkzeugmaschine, angedeutet ist. Mit 2 ist eine Beladestation einer jeweils mit 3 bezeichneten Palette mit nicht näher dargestellten, in der der Beladestation 1 nachgeschalteten Werkzeugmaschine zu bearbeitenden Werkstücken angedeutet.

Darüber hinaus ist bei der Darstellung gemäß Fig. 1 eine Mehrzahl von Palettenlagerplätzen 4 angedeutet, welche im wesentlichen halbkreisförmig um ein Zentrum 5 angeordnet sind, wobei das Zentrum 5, wie dies anhand der nachfolgenden Figuren im Detail erörtert werden wird, die Drehachse eines die Beladestationen 1 bzw. 2 sowie Palettenlager- bzw. -speicherplätze 4 bedienenden Manipulators darstellen wird.

Im Einsatz wird über den in den nachfolgenden Figuren darstellten Manipulator eine Palette 3 von der beispielsweise manuell zu bedienenden Beladestation 2 entweder unmittelbar in die Beladestation 1 der nachgeschalteten Maschine, insbesondere Werkzeugmaschine, oder an einen Palettenlager bzw. -speicherplatz 4 gebracht, um günstigerweise eine Mehrzahl von Paletten für eine Bearbeitung in der der Beladestation 1 nachgeschalteten Werkzeugmaschine vorbereiten zu können. Durch Vorsehen einer Mehrzahl von Palettenlager- bzw. -speicherplätzen 4 wird es somit möglich, eine Vielzahl von jeweils auf einer Palette 3 gelagerten, zu bearbeitenden Werkstücken vorzubereiten, so daß in weiterer Folge über einen vergleichsweise langen Zeitraum, beispielsweise einen Betrieb der Werkzeugmaschine in der Nacht, eine entsprechend große Anzahl von zu bearbeitenden Werkstücken bearbeitet werden kann, bevor eine neuerliche Vorbereitung von Werkstücken auf jeweils einer Palette 3 in der Beladestation 2 erforderlich ist. Gegebenenfalls kann anstelle einer Speicherposition 4 eine weitere Beladestation für eine zusätzliche Maschine vorgesehen sein und von dem im Zentrum 5 anzuordnenden Manipulator bedient werden.

Bei der in Fig. 2 gezeigten, perspektivischen Darstellung eines allgemein mit 6 bezeichneten Manipulators ist ersichtlich, daß auf einer mit 7 bezeichneten Bodenplatte bzw. Halterung ein Support 8 vorgesehen ist, wobei im Support 8 ein in den nachfolgenden Figuren schematisch angedeuteter Drehantrieb integriert ist, um bei einer Positionierung der Drehachse des Supports 8 im Zentrum 5 der Beladevorrichtung gemäß Fig. 1 die konzentrisch angeordneten Palettenlager- bzw. -speicherplätze 4 sowie die Beladestationen 1 und 2 bedienen zu können.

Der Manipulator 6 weist eine Gabel 9 auf, welche zur Aufnahme einer in Fig. 2 nicht näher dargestellten Palette dient. Zur Bewegung der Gabel 9 sowohl in einer Höhenrichtung als auch in einer Richtung in Richtung zu und weg von den in Fig. 1 dargestellten Palettenlager- bzw. -speicherplätzen 4 als auch den Beladestationen 1 und 2 ist ein Gelenkmechanismus vorgesehen, wobei jeweils zu beiden Seiten des Supports 8 bzw. einer Basisplatte 10 des Supports 8 im wesentlichen vertikal verlaufende Hebelarme 11 und 12 vorgesehen sind, welche mit jeweils einem plattenartigen Element 13 an dem von der Basisplatte 10 abgewandten Ende gekoppelt sind. Darüber hinaus sind zwei im wesentlichen parallele Träger bzw. Balken 14 und 15 vorgesehen, welche mit einem insbesondere abgewinkelten bzw. gekrümmten Hebelarm 16 jeweils gekoppelt sind, an welchem die Gabel 9 angelenkt ist. Durch die im wesentlichen parallelen Träger 14 und 15 sowie die damit verbundenen Hebelelemente bzw. -arme 11 und 12 wird ein Gelenkvieleck, insbesondere Gelenkparallelogramm ausgebildet.

Darüber hinaus sind zwei Verstellantriebe 17 und 18 vorgesehen, welche, wie dies aus den nachfolgenden Figuren deutlicher ersichtlich werden wird, im wesentlichen normal zueinander angeordnet sind bzw. an einzelnen Elementen des Gelenkvielecks sowie den Hebelverbindungen angreifen, um eine Verschiebung bzw. Verlagerung der Gabel 9 in einer im wesentlichen vertikalen Ebene zu ermöglichen.

Im Bereich der Vielzahl von Gelenkverbindungen zwischen den einzelnen Gelenkteilen können jeweils im wesentlichen verschleißarme bzw. verschleißfreie Buchsen bzw. Gelenkbuchsen vorgesehen sein, so daß durch Einsatz einfacher Hebel- bzw. Gelenkelemente ein großer Bewegungsbereich, wie dies aus den nachfolgenden Figuren deutlicher ersichtlich werden wird, von der Gabel 9 und somit von einer durch die Gabel 9 zu transportierenden Palette überstrichen werden kann.

Die Verstellantriebe 17 und 18 sind in einfacher Weise von Spindelantrieben oder Servomotoren gebildet, welche sich entsprechend genau und einfach steuern lassen, um die Vielzahl von Bewegungen und Positionierungen der Gabel 9, von welchen in den nachfolgenden Figuren schematisch einige dargestellt sind, ermöglichen zu können. Die Verstellantriebe 17 und 18 sind hiebei mit einer entsprechenden Steuerung bzw. Regelung, welche an sich bekannt ist und nicht näher im Detail erörtert ist, zur Erzielung der unterschiedlichen Stellungen des Manipulators, insbesondere der Gabel 9 desselben, gekoppelt und von dieser ansteuerbar. Ebenso ist der im Support 8 aufgenommene Drehantrieb für eine Bewegung um die in Fig. 1 mit 5 bezeichnete Drehachse bzw. das Zentrum mit der nicht näher dargestellten Regel- bzw. Steuervorrichtung gekoppelt.

In den Darstellungen gemäß Fig. 3a bis 3d sind unterschiedliche Positionen bzw. Stellungen der Gabel 9 angedeutet, wobei ersichtlich ist, daß durch Vorsehen des Gelenkvielecks, welches insbesondere die zwei im wesentlichen parallelen Balken bzw. Träger 14 und 15 umfaßt, als auch der Hebelverbindungen durch Bereitstellung der im wesentlichen vertikalen Hebelarme 11 und 12 als auch des plattenartigen Elements 13 die Gabel 9 von den in Fig. 3a und 3b dargestellten, abgesenkten Positionen in die in Fig. 3c und 3d dargestellten bzw. angedeuteten, angehobenen Positionen bewegbar ist, so daß ein großer Bewegungsbereich der Gabel 9 und somit einer damit zu transportierenden Palette überstrichen werden kann.

Aus den Darstellungen gemäß Fig. 3b bis 3d ist darüber hinaus der schematisch mit 19 angedeutete Drehantrieb ersichtlich.

Zur korrekten bzw. sicheren Positionierung einer an der Gabel 9 aufzunehmenden Palette sind darüber hinaus Zapfen bzw. Stifte 20 angedeutet.

Durch eine entsprechende Steuerung der im wesentlichen normal aufeinander angeordneten Verstellantriebe 17 und 18 sowie geeignete Wahl der Anlenkpunkte an unterschiedlichen Elementen der Gelenkverbindung 14 und 15 sowie Hebelverbindung 11, 12 und 13 läßt sich somit entsprechend den Anforderungen ein großer Bewegungsbereich sowohl in Höhenrichtung, wie dies aus einem Vergleich beispielsweise von Fig. 3b und 3c ersichtlich ist, als auch in horizontaler Richtung der Gabel 9 sowie einer damit zu transportierenden Palette erzielen.

Darüber hinaus ist ersichtlich, daß sowohl die Hebelelemente 11, 12 als auch die Träger 14, 15 derart an dem plattenartigen Element 13 angelenkt sind, daß sie in einer Seitenansicht im wesentlichen einander wenigstens teilweise kreuzen bzw. schneiden, so daß bei geringer Bauhöhe ein großer Bewegungsbereich der Gabel 9 sowohl in horizontaler als auch vertikaler Richtung erzielbar ist. Die einzelnen Elemente 11, 12 sowie 14 und 15 sind hiebei beispielsweise jeweils innen und außen an dem plattenförmigen Element 13 angelenkt.

## Patentansprüche

1. Manipulator für die Beladung wenigstens einer Maschine und/oder eines Speichers mit Paletten (3),
wobei der Manipulator 6 eine an einem um eine im wesentlichen senkrechte Rotationsachse (5) drehbaren bzw. verschwenkbarem Support (8) gelagerte Gabel (9) zum Aufnehmen und Transportieren jeweils einer Palette (3) aufweist,
wobei die Gabel (9) über zwei voneinander getrennte Verstellantriebe (17, 18) in einer im wesentlichen vertikalen Ebene heb- und senkbar und in Richtung zu und weg von einem Palettenlagerplatz (1, 2, 4) bewegbar ist,
**dadurch gekennzeichnet, daß** die Gabel (9) über eine mit einem Gelenkvieleck (14, 15) gekoppelte Hebelverbindung (11, 12, 13, 16) an dem Support (8) gelagert ist, wobei die Hebelverbindung (11, 12, 13) jeweils zwei Hebelarme (11, 12) umfasst, welche an ihren von einer Basisplatte des Supports abgewandten Enden jeweils an einem plattenartigen Element (13) angreifen, und daß die Verstellantriebe (17,18) an unterschiedlichen Stellen der Hebelverbindung (11, 12, 13) und/oder des Gelenkvielecks (14, 15) angreifen wobei ein Verstellantrieb (17) an dem plattenartigen Element (13) der Hebelverbindung gelagert ist.

2. Manipulator nach Anspruch 1, **dadurch gekennzeichnet, daß** sämtliche Elemente (11, 12, 13, 14, 15, 16) des Gelenkvielecks sowie der Hebelverbindung jeweils symmetrisch zu dem die Rotationsachse (5) der Gabel (9) definierenden bzw. aufweisenden Support (8) angeordnet sind und zu beiden Seiten mit der Gabel (9) koppelbar sind.

3. Manipulator nach Anspruch 1 oder 2, **dadurch gekennzeichnet, daß** die jeweils zwei Hebelarme (11, 12) der Hebelverbindung (11, 12, 13) im wesentlichen vertikal verlaufen und in Abstand voneinander an einer Basisplatte (10) des Supports (8) schwenkbar angelenkt sind, daß darüber hinaus an dem plattenartigen Element (13) jeweils ein Ende der das Gelenkvieleck ausbildenden, im wesentlichen parallel zueinander verlaufenden Träger bzw. Balken (14, 15) angelenkt ist, und daß die Gabel (9) an den jeweils von der Verbindung mit dem plattenartigen Element (13) abgewandten Enden mit den im wesentlichen zueinander parallelen Trägern (14, 15) des Gelenkvielecks über einen weiteren Hebelarm (16) gekoppelt ist.

4. Manipulator nach Anspruch 3, **dadurch gekennzeichnet, daß** der mit der Gabel (9) gekoppelte Hebelarm (16) gebogen bzw. abgewinkelt ausgebildet ist.

5. Manipulator nach Anspruch 3 oder 4, **dadurch gekennzeichnet, daß** ein Anlenkpunkt eines im wesentlichen vertikalen Hebelarms (12) und ein Anlenkpunkt eines Trägers (14) des Gelenkvielecks zusammenfallen.

6. Manipulator nach einem der Ansprüche 3 bis 5, **dadurch gekennzeichnet, daß** ein Verstellantrieb (18) an einem der im wesentlichen vertikal angeordneten Hebelarme (12) angreift.

7. Manipulator nach einem der Ansprüche 1 bis 6, **dadurch gekennzeichnet, daß** die Verstellantriebe (17, 18) in im wesentlichen normal aufeinander wirkenden Richtungen im wesentlichen in der im wesentlichen vertikalen Ebene einer Verstellung der Gabel (9) angeordnet sind.

8. Manipulator nach einem der Ansprüche 1 bis 7, **dadurch gekennzeichnet, daß** die Verstellantriebe (17, 18) von Spindelantrieben oder Servomotoren gebildet sind.

9. Manipulator nach einem der Ansprüche 1 bis 8, **dadurch gekennzeichnet, daß** die Elemente (11, 12, 14 15) der Hebelverbindung und des Gelenkvielecks in einer Seitenansicht einander jeweils wenigstens teilweise kreuzen bzw. schneiden.

10. Manipulator nach einem der Ansprüche 1 bis 9, **dadurch gekennzeichnet, daß** die Maschine als Werkzeugmaschine ausgebildet ist, und daß die Paletten (3) jeweils eine Mehrzahl von Gegenständen, insbesondere zu bearbeitenden Werkstücken, tragen.

11. Manipulator nach einem der Ansprüche 1 bis 10, **dadurch gekennzeichnet, daß** das Gelenkvieleck (14, 15) als Gelenkparallelogramm ausgebildet ist.

12. Beladevorrichtung für wenigstens eine Maschine, insbesondere Werkzeugmaschine, umfassend eine Beladestation für jeweils eine Palette (3) mit einer Mehrzahl von zu bearbeitenden Werkstücken, eine Beladestation (1, 2) für die Maschine, insbesondere Werkzeugmaschine, und eine Mehrzahl von Palettenlager- bzw. -speicherplätzen (4) zur Anordnung bzw. Aufnahme von jeweils einer Palette, **dadurch gekennzeichnet, daß** sie einen Manipulator (6) nach einem der Ansprüche 1 bis 11 zum Aufnehmen und Transportieren jeweils einer Palette (3) zwischen den einzelnen Palettenlagerplätzen (4) und Beladestationen (1, 2) umfaßt.

## Claims

1. Manipulator for loading at least one machine and/or store with pallets (3),
wherein the manipulator (6) has a fork (9) arranged on a support (8), which can be rotated or pivoted about a substantially vertical rotational axis (5), for receiving and transporting in each case one pallet (3),
wherein the fork (9) can be raised and lowered in a substantially vertical plane and can be moved in a direction towards and away from a pallet storage space (1, 2, 4) via two separate adjusting drives (17, 18), **characterized in**
**that** the fork (9) is arranged on the support (8) via a lever connection (11, 12, 13, 18) coupled to a polygonal linkage (14, 15), wherein the lever connection (11, 12, 13) comprises respectively two lever arms (11, 12) which each act on a plate-like element (13) at their ends remote from a base plate of the support, and that the adjusting drives (17, 18) act on different points of the lever connection (11, 12, 13) and/or of the polygonal linkage (14, 15), wherein one adjusting drive (17) is mounted on the plate-like element (13) of the lever connection.

2. Manipulator according to Claim 1, **characterized in that** all of the elements (11, 12, 13, 14, 15, 18) of the polygonal linkage and of the lever connection are arranged respectively in a symmetrical manner with respect to the support (8) which defines or contains the rotational axis (5) of the fork (9), and said elements can be coupled on both sides to the fork (9).

3. Manipulator according to Claim 1 or 2, **characterized in that** the respectively two lever arms (11, 12) of the lever connection (11, 12, 13) extend in a substantially vertical manner and are articulated in a pivotable manner and spaced apart from one another on a base plate (10) of the support (8), that furthermore respectively one end of the carriers or beams (14, 15) that form the polygonal linkage and extend substantially parallel to one another is articulated on the plate-like element (13), and that the fork (9) is coupled, at the ends which are respectively remote from the connection to the plate-like element (13), to the substantially parallel carriers (14, 15) of the polygonal linkage via a further lever arm (16).

4. Manipulator according to Claim 3, **characterized in that** the lever arm (16) coupled to the fork (9) is formed in a curved or angled manner.

5. Manipulator according to Claim 3 or 4, **characterized in that** a point of articulation of a substantially vertical lever arm (12) coincides with a point of articulation of a carrier (14) of the polygonal linkage.

6. Manipulator according to one of Claims 3 to 5, **characterized in that** one adjusting drive (18) acts on one of the substantially vertically arranged lever arms (12).

7. Manipulator according to one of Claims 1 to 6, **characterized in that** the adjusting drives (17, 18) are arranged in directions acting substantially normally on one another substantially in the substantially vertical plane of adjustment of the fork (9).

8. Manipulator according to one of Claims 1 to 7, **characterized in that** the adjusting drives (17, 18) are formed by spindle drives or servomotors.

9. Manipulator according to one of Claims 1 to 8, **characterized in that** the elements (11, 12, 14, 15) of the lever connection and of the polygonal linkage respectively cross or intersect one another at least partially as seen in a side view.

10. Manipulator according to one of Claims 1 to 9, **characterized in that** the machine is in the form of a machine tool, and that the pallets (3) each carry a plurality of objects, in particular workpieces to be machined.

11. Manipulator according to one of Claims 1 to 10, **characterized in that** the polygonal linkage (14, 15) is configured as a parallelogram linkage,

12. Loading device for at least one machine, in particular a machine tool, comprising a loading station for in each case one pallet (3) having a plurality of workpieces to be machined, also comprising a loading station (1, 2) for the machine, in particular machine tool, and a plurality of pallet storage spaces (4) for arranging or receiving in each case one pallet, **characterized in that** it comprises a manipulator (6) according to one of Claims 1 to 11 for receiving and transporting in each case one pallet (3) between the individual pallet storage spaces (4) and loading stations (1, 2).

## Revendications

1. Manipulateur pour le chargement d'au moins une machine et/ou d'une réserve avec des palettes (3),
le manipulateur (6) présentant une fourche (9) logée sur un support (8) pouvant tourner et/ou basculer autour d'un axe de rotation (5) sensiblement vertical pour la réception et le transport de respectivement une palette (3),
la fourche (9) pouvant être soulevée et abaissée au moyen de deux entraînements de réglage (17, 18) séparés l'un de l'autre dans un plan sensiblement vertical et pouvant être déplacée en direction d'un emplacement de stockage de palette (1, 2, 4) et à partir de cet emplacement,
**caractérisé en ce**
**que** la fourche (9) est logée au moyen d'une liaison à levier (11, 12, 13, 16) couplée avec un polygone articulé (14, 15) sur le support (8), la liaison à levier (11, 12, 13) comprenant respectivement deux bras de levier (11, 12), qui s'appliquent respectivement par leurs extrémités opposées à une plaque de base du support sur un élément (13) de type plaque, et que les entraînements de réglage (17, 18) s'appliquent en différents endroits de la liaison à levier (11, 12, 13) et/ou du polygone articulé (14, 15), un entraînement de réglage (17) étant monté sur l'élément (13) de type plaque de la liaison à levier.

2. Manipulateur selon la revendication 1, **caractérisé en ce que** tous les éléments (11, 12, 13, 14, 15, 16) du polygone articulé et de la liaison à levier sont disposés respectivement de façon symétrique par rapport au support (8) définissant ou présentant l'axe de rotation (5) de la fourche (9) et peuvent être couplés des deux côtés avec la fourche (9).

3. Manipulateur selon la revendication 1 ou 2, **caractérisé en ce que** les deux bras de levier respectifs (11, 12) de la liaison à levier (11, 12, 13) sont agencés sensiblement verticalement et sont articulés à distance l'un de l'autre de façon pivotante sur la plaque de base (10) du support (8), que d'autre part respectivement une extrémité des supports ou poutres (14, 15) formant le polygone articulé et agencés sensiblement parallèlement entre eux est articulée sur l'élément (13) en forme de plaque, et que la fourche (9) est couplée sur les extrémités, respectivement opposées à la liaison avec l'élément (13) de type plaque, avec les supports (14, 15) sensiblement parallèles entre eux du polygone articulé au moyen d'un autre bras de levier (16).

4. Manipulateur selon la revendication 3, **caractérisé en ce que** le bras de levier (16) couplé avec la fourche (9) est conçu plié ou coudé.

5. Manipulateur selon la revendication 3 ou 4, **caractérisé en ce qu'**un point d'articulation d'un bras de levier (12) sensiblement vertical et un point d'articulation d'un support (14) du polygone articulé coïncident.

6. Manipulateur selon l'une des revendications 3 à 5, **caractérisé en ce qu'**un entraînement de réglage (18) s'applique sur l'un des bras de levier (12) disposés sensiblement verticalement.

7. Manipulateur selon l'une des revendications 1 à 6, **caractérisé en ce que** les entraînements de réglage (17, 18) sont disposés dans des directions agissant sensiblement perpendiculairement les uns par rapport aux autres principalement dans le plan sensiblement vertical d'un réglage de la fourche (9).

8. Manipulateur selon l'une des revendications 1 à 7, **caractérisé en ce que** les entraînements de réglage (17, 18) sont formés par des entraînements à broche ou des servomoteurs.

9. Manipulateur selon l'une des revendications 1 à 8, **caractérisé en ce que** les éléments (11, 12, 14, 15) de la liaison à levier et du polygone articulé se croisent ou se coupent respectivement au moins partiellement dans une vue latérale.

10. Manipulateur selon l'une des revendications 1 à 9, **caractérisé en ce que** la machine est conçue comme machine-outil, et que les palettes (3) portent chacune une pluralité d'objets, en particulier de pièces à usiner.

11. Manipulateur selon l'une des revendications 1 à 10, **caractérisé en ce que** le polygone articulé (14, 15) est conçu comme un parallélogramme articulé.

12. Dispositif de chargement pour au moins une machine, en particulier une machine-outil, comprenant une station de chargement pour respectivement une palette (3) avec une pluralité de pièces à usiner, une station de chargement (1, 2) pour la machine, en particulier la machine-outil, et une pluralité d'emplacements de stockage et/ou de réserve de palette (4) pour la mise en place et/ou la réception de respectivement une palette, **caractérisé en ce qu'**il comprend un manipulateur (6) selon l'une quelconque des revendications 1 à 11 pour la réception et le transport de respectivement une palette (3) entre les différents emplacements de stockage de palette (4) et les différentes stations de chargement (1, 2).
